# EUROPEAN PATENT APPLICATION

(11) **EP 4 796 421 A1**
(43) Date of publication of application: **26.08.2026**
(21) Application number: 26156535.2
(22) Date of filing: 05.02.2026
(51) Int. Cl.: B62J 1/08, B62K 19/36

(54) **SYSTEM AND DEVICE FOR ANGLING BICYCLE SEAT RELATIVE TO BICYCLE FRAME**

(30) Priority: 14.02.2025 US 202519054634
(71) Applicant: CLV, Inc. dba Pivot Cycles, Tempe, AZ 85283 (US)
(72) Inventor: COCALIS, Chris, Tempe, 85283 (US); TISUE, Kevin, Tempe, 85283 (US)
(74) Representative: Hannke Bittner & Partner mbB Regensburg

(57) **Abstract**

The disclosure relates to systems and device that change the effective seat angle of a bicycle. The system may include a bicycle having a seat tube. The bicycle may also have a bicycle seat with a seat post. An insert may include a seat tube interface that is configured to slide into the seat tube. The insert may also include a seat post interface that is configured to receive the seat post. The seat post interface may be formed interior of the seat tube interface. The insert's seat tube interface and seat post interface are offset to change the effective seat angle of the bicycle.

## Description

### TECHNICAL FIELD

This document relates to systems and devices for angling a bicycle seat relative to a bicycle frame.

### BACKGROUND

Bicycle frames are made with a seat angle, defined as the angle from horizontal up to the back of the seat tube. In traditional bikes, the axis of the seat tube goes straight through the center of the bottom bracket (where the pedals and cranks rotate around). However, frames also commonly come with what is called an effective seat angle, which happens when the seat tube is not in line with the bottom bracket. The effective seat angle may be defined by using a datum reference location (derived from a standard seat distance (or seat height) measured up from the bottom bracket) to intersect with a designed seat angle (i.e., where the seat is located). The effective seat angle is the angle from horizontal up to a line drawn from the bottom bracket to the location of the datum seat height. If the axis of the seat tube in a frame crosses the center of the bottom bracket, then the seat angle and the effective seat angle would be the same.

The seat angle (and effective seat angle) of a bike frame is used to locate the rider with respect to the location of the bottom bracket for comfort and performance. It is a number that is used to define the feel and basic fit of a bicycle. Different users may prefer different numbers for either better fit or better performance. Moreover, a different number may be preferred for different riding terrain. Bicycling is a highly competitive sport in which athletes strive to gain every possible advantage. The effective seat angle of a rider's bicycle plays a crucial role in determining both the power the rider can generate and their overall comfort. Riders with different performance goals, physical builds, or kinesthetic needs may have different optimal seat angles. However, bicycle frames are constructed with fixed effective seat angles. It would be desirable to have a bike that could adjust its seat angle or effective seat angle.

### SUMMARY

According to some embodiments, a system for changing the effective seat angle of a bicycle includes a bicycle with a seat tube, a bicycle seat having a seat post, and an insert. The insert may include a seat tube interface configured to slide into the seat tube of the bicycle. The insert may also include a seat post interface configured to receive the seat post. The seat post interface of the insert is formed interior of the seat tube interface. In some embodiments, the insert's seat tube interface and seat shaft interface are offset.

In some embodiments, the offset is an angular offset. In some embodiments, the offset is a lateral offset. In some embodiments, the insert is configured to slide into the seat tube in both a forward seat position and a rearward seat position. In some embodiments, the offset when the seat tube interface is in the forward seat position is different than the offset when the seat tube interface is in the rearward seat position.

In some embodiments, the insert also includes a clamp. The insert may also include a clamp receiving portion that is configured to receive at least a portion of the clamp. The clamp may comprise clamp extensions that are configured to fit into extension receivers formed in the clamp receiving portion. In some embodiments, when the clamp is tightened around the seat post, the clamp extensions are pushed into the extension receivers. In some embodiments, the top edge of the clamp and the top edge of the insert are flush.

In some embodiments, the system also includes a clamp configured to couple the insert to the seat post. A second clamp may be configured to couple the insert to the seat tube. In some embodiments, the insert may include reinforcing members disposed on the seat tube interface.

A bicycle seat tube insert, according to some embodiments, includes a seat tube interface configured to slide into a seat tube of a bicycle and a seat post interface configured to receive a seat post of a bicycle seat. The seat post interface is formed interior of the seat tube interface. The seat tube interface and the seat post interface of the insert are offset.

In some embodiments, the offset is adjustable by a user. In some embodiments, the seat tube interface has a first cross-sectional shape and the seat post interface has a second cross-sectional shape. In some embodiments, the first cross-sectional shape and the second cross-sectional shape are different.

In some embodiments, a bicycle seat tube insert includes a seat tube interface configured to slide into a seat tube of a bicycle. The insert also includes a seat post interface configured to receive a seat post of a bicycle seat. The seat post interface is formed interior of the seat tube interface. The insert may also include a clamp that is at least partially disposed in a clamp receiving portion formed in the insert. In some embodiments, the seat tube interface and the seat post interface are offset. In some embodiments, the insert also includes a screw configured to tighten the clamp. In some embodiments, the clamp is shaped to plastically deform an upper portion of the insert when the clamp is tightened. In some embodiments, the plastic deformation of the upper portion of the insert secures the insert in the seat tube. In some embodiments, the insert includes a retaining portion. In some embodiments, the clamp receiving portions formed in the insert includes extension receivers formed therein.

The foregoing and other aspects, features, and advantages will be apparent from the DESCRIPTION and DRAWINGS, and from the CLAIMS if any are included.

### BRIEF DESCRIPTION OF THE DRAWINGS

Implementations will hereinafter be described in conjunction with the appended and/or included DRAWINGS.
Fig. 1 shows a bicycle frame with a seat tube and an effective seat angle.
Fig. 2 shows an insert according to some embodiments located in a seat tube and receiving a seat post.
Fig. 3 shows an insert according to some embodiments.
Fig. 4 shows a cross-section of the insert shown in Fig. 2 taken at the line 4 - 4' with the seat post and clamp omitted for clarity.
Fig. 5 shows a detailed view of a bicycle frame with an insert according to some embodiments.
Fig. 6 shows an insert, according to some embodiments, located in a seat tube and receiving a seat post.
Fig. 7 shows a side view of the insert of Fig. 6.
Fig. 8 shows a clamp for an insert according to some embodiments.
Fig. 9 shows a top view of an insert according to some embodiments.

### DETAILED DESCRIPTION

Detailed aspects and applications of the disclosure are described below, in the drawings, and detailed description of the technology. Unless specifically noted, it is intended that the words and phrases in the specification and the claims be given their plain, ordinary, and accustomed meaning to those of ordinary skill in the applicable arts.

In the following description, and for the purposes of explanation, numerous specific details are set forth in order to provide a thorough understanding of the various aspects of the disclosure. It will be understood, however, by those skilled in the relevant arts, that embodiments of the technology disclosed herein may be practiced without these specific details. It should be noted that there are many different and alternative configurations, devices, and technologies to which the disclosed technologies may be applied. The full scope of the technology disclosed herein is not limited to the examples described below.

The singular forms "a," "an," and "the" include plural referents unless the context clearly dictates otherwise. Thus, for example, reference to "a step" includes reference to one or more of such steps.

The word "exemplary," "example," or various forms thereof are used herein to mean serving as an example, instance, or illustration. Any aspect or design described herein as "exemplary" or as an "example" is not necessarily to be construed as preferred or advantageous over other aspects or designs. Furthermore, examples are provided solely for purposes of clarity and understanding and are not meant to limit or restrict the disclosed subject matter or relevant portions of this disclosure in any manner. It is to be appreciated that a myriad of additional or alternate examples of varying scope could have been presented but have been omitted for purposes of brevity.

The term "plurality", as used herein, means more than one. When a range of values is expressed, another embodiment includes one particular value and/or another particular value. Similarly, when values are expressed as approximations, by use of the antecedent "about," it will be understood that the particular value forms another embodiment. All ranges are inclusive and combinable.

Throughout the description and claims of this specification, the words "comprise" and "contain" and variations of the words, for example, "comprising" and "comprises," mean "including but not limited to," and are not intended to (and do not) exclude other components.

As required, detailed embodiments of the present disclosure are included herein. It is to be understood that the disclosed embodiments are merely exemplary of the invention that may be embodied in various forms. Therefore, specific structural and functional details disclosed herein are not to be interpreted as limits, but merely as a basis for teaching one skilled in the art to employ the present invention. **The** specific examples below will enable the disclosure to be better understood. However, they are given merely by way of guidance and do not imply any limitation.

The present disclosure may be understood more readily by reference to the following detailed description taken in connection with the accompanying figures and examples, which form a part of this disclosure. It is to be understood that this disclosure is not limited to the specific materials, devices, methods, applications, conditions, or parameters described and/or shown herein, and that the terminology used herein is for the purpose of describing particular embodiments by way of example only and is not intended to be limiting of the claimed inventions.

Bicycle frames have a specific seat angle, the angle between the horizontal plane and the back of the seat tube. The seat tube has a seat tube axis. The seat tube axis refers to an imaginary line that runs through the center of the seat tube. In traditional bike designs, the seat tube axis runs directly through the center of the bottom bracket, the component around which the pedals and cranks rotate. In some bicycle designs, the seat tube axis does not align with the bottom bracket. In this circumstance, instead of a seat angle, the bicycle is said to have an effective seat angle.

The effective seat angle is defined as the angle between the horizontal and a line drawn from the bottom bracket to a point a standardized seat height above the seat tube. The point is a datum location and represents the rider's seat location. The effective seat angle considers the relative position of the rider and the bottom bracket, allowing for better fitting and performance adjustments.

The effective seat angle is an important measurement. The effective seat angle affects the rider's weight distribution, balance on the bike, knee angles, hip angles, and position relative to the pedals and handlebars. An optimal seat angle allows for a more effective range of motion, specifically in the knees and hips. If the effective seat angle is too large or too small, pedaling is less efficient and power output is reduced.

An optimized effective seat angle improves rider performance. When weight is properly balanced between the front and rear wheels, traction is improved, leading to more effective power application, especially during acceleration and climbing. Conversely, an improper effective seat angle can result in too much weight on the front or back of the bicycle, hindering performance.

Generally, a smaller effective seat angle (where the seat is positioned further rearward) improves rider comfort and reduces fatigue. A comfortable rider can deliver more consistent power over extended rides, as discomfort can lead to inefficient pedaling or the need for frequent adjustments. A larger effective seat angle (where the seat is positioned further forward) typically allows the rider to adopt a more aggressive stance, shifting their weight forward. This position can enhance power transfer to the pedals and improve aerodynamics, especially in racing or climbing scenarios.

Riders may prefer different effective seat angles based on their riding style-whether they prioritize comfort for long-distance rides or a more aggressive position for racing. Bikes with adjustable seat angles can accommodate individual rider preferences, enhancing the overall cycling experience.

The present invention is directed to systems and devices for angling the bicycle seat relative to the bicycle frame. In some embodiments, a system of the present disclosure uses an insert to angle the bicycle seat relative to the bicycle frame. Typically, the effective seat angle of a bicycle is determined by reference to the seat tube angle, the angle the seat tube center line makes with the horizontal. The seat would sit along the seat tube center line because the seat post is collinear with the seat tube. The insert allows a user to change the positional or angular relationship between the seat tube and the seat post. This changes the bicycle's seat location because the seat is no longer confined to the seat tube center line.

In some embodiments, the insert includes a seat tube interface that forms an exterior surface of the insert. For example, the seat tube interface may slide into the bicycle's seat tube. In some embodiments, the insert also includes a seat post interface that forms an interior surface of the insert. The seat post interface is configured to receive the seat post of the bicycle seat. The seat tube interface and the seat post interface have different orientations. The different orientations can be considered as offsets.

As used herein, an offset is a change in the orientation of the seat post interface relative to the seat tube interface. The seat tube interface has an axis that defines its orientation. This axis is parallel to the surface of the seat tube interface and is centered interior of the seat tube interface. Similarly, the seat post interface has an axis that is parallel to its surface and centered interior of the seat post interface. In a typical bicycle seat post-seat tube relationship, the axis of the bicycle seat post is substantially aligned with that of the seat tube. That is, the axes are collinear.

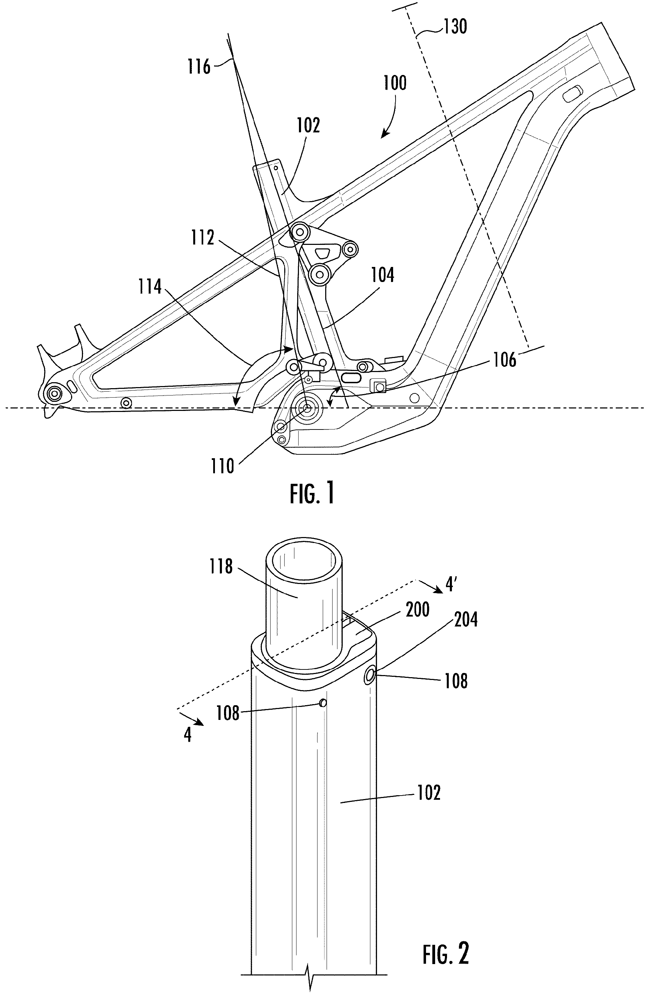

The disclosed insert is configured to create one or more offsets between the axis of the bicycle seat post and that axis of the seat tube. The offset can be a lateral offset or an angular offset. A lateral offset means that the axis of the bicycle seat post is moved forward or rearward (relative to the bicycle) of the seat tube axis. The seat tube axis and the seat post axis may be laterally offset and be parallel or not parallel. Changing the lateral offset will change the effective seat angle. An angular offset means that the axis of the seat post is rotated relative to the axis of the seat tube. Changing the angular offset will change the effective seat angle.
Features of the present disclosure will be described with reference to the figures. Fig. 1 shows bicycle frame 100. Bicycle frame 100 includes seat tube 102. Seat tube 102 has a seat tube center line 104. Seat tube center line 104 is an imaginary line that runs parallel to seat tube 102 through the midpoint of the cross-section of seat tube 102. Seat tube center line 104 of seat tube 102 forms a seat tube angle 106 with a horizontal line, as shown in Fig. 1. The horizontal line passes through bottom bracket 110. Bottom bracket 110 is configured to receive the cranks and pedals.

Seat tube center line 104 extends through seat location 116. Seat location 116 is at standardized seat height 130. As previously described, the effective seat angle is the angle between a horizontal line and an imaginary line that extends through seat location 116 and bottom bracket 110. Fig. 1 shows effective seat axis 112, which extends through seat location 116 and bottom bracket 110. Effective seat angle 114 is the angle formed between the horizontal and effective seat axis 112.

Fig. 2 shows insert 200 located in seat tube 102. Insert 200 is configured to slide into a void formed in seat tube 102. In some embodiments, seat tube 102 includes seat tube screw holes 108. Seat tube screw holes 108 are configured to receive screws 204. Seat tube 102 may include two seat tube screw holes 108. Two seat tube screw holes 108 can be used to secure insert 200 in one of a forward or a backward orientation. In the forward orientation, insert 200 may move seat location 116 forward, increasing effective seat angle 114. In the backward orientation, insert 200 may move seat location 116 backward, decreasing effective seat angle 114.

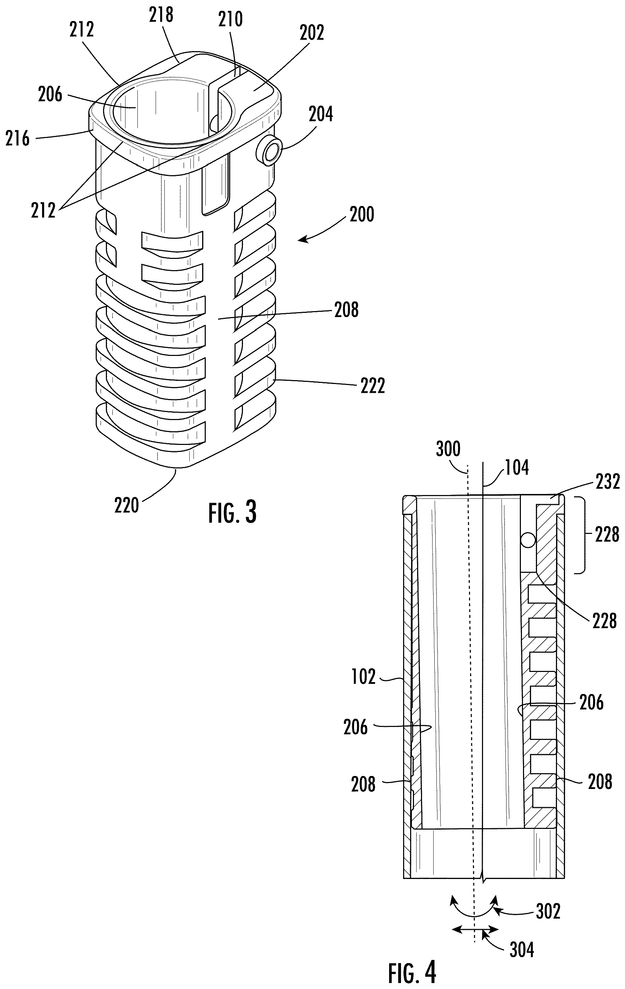

Fig. 3 shows insert 200 according to some embodiments. As shown in Fig. 3, insert 200 has a first end 218 and a second end 220. Insert 200 has a seat tube interface 208 on the outer surface of insert 200. Seat tube interface 208 is configured to slide into seat tube 102 of bicycle frame 100. Seat tube interface 208 may include an outer surface of insert 200 that fits within seat tube 102. In some embodiments, seat tube interface 208 may be symmetrical (e.g., a front half is symmetrical with a back half) such that insert 200 may be inserted into seat tube 102 in either a forward orientation or a backward orientation. Insert 200 also includes seat post interface 206. Seat post interface 206 is configured to receive seat post 118. Seat post interface 206 is formed interior of seat tube interface 208. In some embodiments, seat post interface 206 may be symmetrical (e.g., a front half is symmetrical with a back half) such that insert 200 accommodates seat post 118 with the bicycle seat facing forward, regardless of whether insert 200 is inserted into seat tube 102 in a forward orientation or a backward orientation.

In some embodiments, insert 200 also includes a retaining edge 216. Retaining edge 216 is configured to rest on an upper edge of seat tube 102. Retaining edge 216 prevents insert 200 from sliding into the seat tube 102. In some embodiments, insert 200 also includes reinforcing members 222. Reinforcing members 222 may be part of seat tube interface 208. Reinforcing members 222 are configured to extend to seat tube 102 to secure insert 200 in seat tube 102. In some embodiments, reinforcing members 222 have voids formed between them. These voids may lower the weight of insert 200 without compromising on the structure of insert 200 in seat tube 102. In some embodiments, insert 200 also includes seat post clamp 202. Seat post clamp 202 is configured to clamp onto seat post 118 when seat post 118 is located in seat post interface 206.

Insert 200 allows a rider to change effective seat angle 114 by creating an offset between seat tube 102 and seat post 118. This occurs because the orientation of seat post interface 206 determines the orientation of seat post 118. Similarly, the orientation of seat tube interface 208 determines the relative orientation of insert 200 (with seat post interface 206) in seat tube 102. Thus, by changing the relative orientations of seat post interface 206 and seat tube interface 208, the relative orientations of seat tube 102 and seat post 118 also change.

Fig. 4 shows a cross-section of insert 200 from FIG. 2 taken at the line 4 - 4'. For clarity, seat tube 102 and seat post clamp 202 are omitted. As shown in Fig. 4, insert 200 is located in seat tube 102, and seat tube interface 208 abuts seat tube 102. Seat tube 102 has seat tube center line 104. Without insert 200, seat location 116 would be along seat tube center line 104.

Fig. 4 also shows seat post center line 300. When seat post 118 is inserted into insert 200 and abuts seat post interface 206, seat post 118 will have seat post center line 300. Seat post center line 300 can be offset from seat tube center line 104. The offset occurs because a centerline of seat post interface 206 is moved, or offset, from a centerline of seat tube interface 208. As described above, because seat post interface 206 is configured to receive seat post 118 and seat tube interface 208 is configured to be received by seat tube 102, the relative offsets of the centerlines of seat post interface 206 and seat tube interface 208 results in seat post 118 being offset from seat tube 102. By offsetting seat post center line 300 and seat tube center line 104, the rider moves seat location 116 and, therefore, changes effective seat angle 114. The offset may be an angular offset 302 or a lateral offset 304 or a combination of an angular offset 302 and a lateral offset 304. A single insert 200 may provide different angular offsets 302 and/or different lateral offsets 304 (e.g., depending on the orientation in which insert 200 is placed into seat tube 102 or if insert 200 has adjustable offsets, as discussed below).

Angular offset 302 results from a change in the angular relationship between seat post center line 300 and seat tube center line 104. For example, if insert 200 is formed such that seat post center line 300 is rotated by 5 degrees clockwise, insert 200 could be said to have angular offset 302. Continuing with the example, a 5 degree clockwise angular offset 302 would move seat location 116 forward, thereby increasing effective seat angle 114.

Lateral offset 304 results from a change in the lateral relationship between seat post center line 300 and seat tube center line 104. For example, lateral offset 304 occurs if seat post center line 300 is moved a distance to the left of seat tube center line 104, as shown in Fig. 4. Continuing with the example, a left lateral offset 304 would move seat location 116 rearward, thereby decreasing effective seat angle 114.

Fig. 4 also shows clamp receiving portion 228. Clamp receiving portion 228 may be formed in insert 200 and is configured to receive seat post clamp 202. Clamp receiving portion 228 may be shaped to receive a specific seat post clamp 202. In some embodiments, clamp receiving portion 228 may be sized such that seat post clamp 202 is entirely inside clamp receiving portion 228. In that embodiment, seat post clamp 202 may be said to be entirely inside clamp receiving portion 228 if, when located in clamp receiving portion 228, seat post clamp 202's top edge is even with or lower than first end 218 of insert 200.

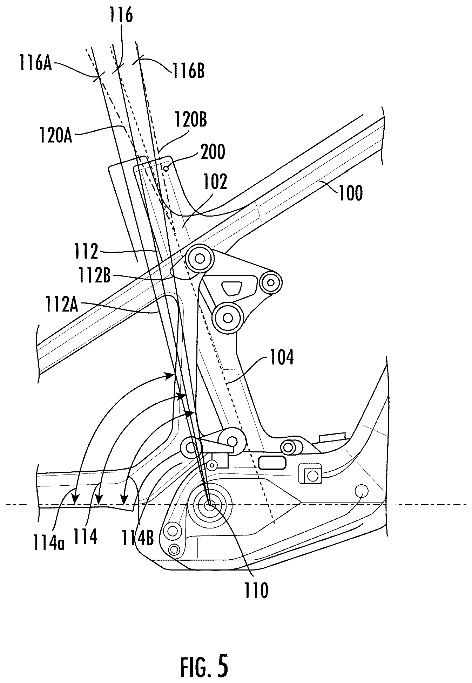

Fig. 5 shows insert 200 in bicycle frame 100 and how insert 200 changes effective seat angle 114 of the bicycle. Fig. 5 shows seat tube 102 with a seat tube center line 104. As previously described, without insert 200, seat location 116 is a standardized seat height 130 (see FIG. 1) from bottom bracket 110. The line formed between seat location 116 and bottom bracket 110 is effective seat axis 112. The angle that effective seat axis 112 forms with the horizontal is effective seat angle 114.

Fig. 5 shows the results of insert 200 being configured in two ways. As one example, these two configurations may result from placing insert 200 into seat tube 102 in a backward orientation (for example, as shown in FIG. 4) and a forward orientation (for example, if insert 200 was placed into seat tube 102 in a position rotated 180 degrees from what is shown in FIG. 4). In the first configuration, represented in Fig. 5 with the "A" designation, insert 200 is configured such that a received seat post 118 has a seat post angle 120A. Standardized seat height 130 (see FIG. 1) from bottom bracket 110 intersects seat post angle 120A at seat location 116A. Effective seat axis 112A connects seat location 116A and bottom bracket 110. Finally, effective seat angle 114A is the angle between effective seat axis 112A and the horizontal. In the second configuration, represented in Fig. 5 with the "B" designation, insert 200 is configured such that a received seat post 118 has a seat post angle 120B. Standardized seat height 130 (see FIG. 1) from bottom bracket 110 intersects seat post angle 120B intersects at seat location 116B. Effective seat axis 112B connects seat location 116B and bottom bracket 110. Finally, effective seat angle 114B is the angle between effective seat axis 112B and the horizontal.

The "A" designated features in Fig. 5 show how insert 200 moves seat location 116A rearward of seat location 116. The rearward movement of seat location 116A results in a smaller effective seat angle 114A. Thus, 114A is smaller than 114. Similarly, the "B" designated features in Fig. 5 show insert 200 moving seat location 116 forward to seat location 116B. The forward movement of seat location 116B results in effective seat angle 114B, which is greater than effective seat angle 114.

As previously described, the change in effective seat angle 114 can be made using either angular offset 302 or lateral offset 304, or both. For example, the forward movement of seat location 116 could be the result of lateral offset 304. This lateral offset 304 moves seat post center line 300 forward of seat tube center line 104 while remaining parallel to seat tube center line 104. Alternatively, the forward movement of seat location 116 could result from angular offset 302. This angular offset 302 rotates seat post center line 300 clockwise relative to seat tube center line 104. Finally, the forward movement of seat location 116 could result from angular offset 302 and lateral offset 304. Lateral offset 304 may be the result of moving seat post center line 300 forward of seat tube center line 104 in insert 200.

Similarly, the rearward movement of seat location 116 could be the result of lateral offset 304. This lateral offset 304 moves seat post center line 300 rearward of seat tube center line 104 while remaining parallel to seat tube center line 104. Alternatively, the rearward movement of seat location 116 could result from angular offset 302. This angular offset 302 rotates seat post center line 300 counterclockwise relative to seat tube center line 104. Finally, the rearward movement of seat location 116 could result from angular offset 302 and lateral offset 304. Lateral offset 304 may be the result of moving seat post center line 300 rearward of seat tube center line 104 in insert 200.

In some embodiments, insert 200 may have angular offset 302 or lateral offset 304 that is adjustable by the rider. For example, angular offset 302 or lateral offset 304 may be adjusted using wedges configured to fit into receiving portions of insert 200. Wedges change the offset of seat post center line 300 and seat tube center line 104. In some embodiments, wedges may be stacked in series to change the location of seat post center line 300. For example, seat post interface 206 may be a tubular feature that extends from retaining edge 216 in an adjustable manner. For example, seat post interface 206 may be located on a track formed in retaining edge 216. Or, seat post interface 206 may clip into specific portions of retaining edge 216. Retaining edge 216 may also be configured to receive wedges. The wedges can be stacked one on the other such that an outermost wedge forms seat tube interface 208 of insert 200. To create a forward lateral offset 304, a rider could attach more wedges to retaining edge 216 rearward of seat post interface 206 than forward of seat post interface 206. Similarly, to create angular offset 302, a rider could use wedges that are thicker on the top or the bottom to tilt seat post interface 206.

A user-adjustable insert 200 may also be adjustable in other ways. For example, seat post interface 206 may be mounted in insert 200 using hinged members that permit the rotation of seat post interface 206 in insert 200. The hinged members may be adjustable using a screwdriver or other implement. Or, for example, insert 200 may have screws formed therein that, upon rotation, change either angular offset 302 or lateral offset 304. The screw may deform, move, or reposition a portion of insert 200 to produce angular offset 302 or lateral offset 304.

In some embodiments, insert 200 may be formed with a specific offset. For example, insert 200 may be made with angular offset 302 or lateral offset 304 that increases or decreases effective seat angle 114 a fixed amount. If a user prefers different effective seat angles for different riding conditions or terrain, the user may have multiple inserts, each with its own specific offset to achieve the various desired effective seat angles.

In some embodiments, insert 200 may also be reversable. That is, when insert 200 is inserted into seat tube 102 in a forward orientation, insert 200 increases effective seat angle 114. Conversely, when insert 200 is inserted into seat tube 102 in a rearward orientation, insert 200 decreases effective seat angle 114. An example of the rearward orientation is shown in FIG. 4. The forward orientation can be achieved by removing insert 200, rotating insert 200 by 180 degrees, and then placing insert 200 back in seat tube 102.

Insert 200 may also be formed with cross-sections of seat post interface 206 and seat tube interface 208 configured to receive a variety of seat posts 118 and be inserted into a variety of seat tubes 102. For example, insert 200 may have seat tube interface 208 with a square cross-section and a seat post interface 206 with an oblong oval cross-section. This insert 200 could slide into an appropriately sized seat tube 102 with a square cross-section and also could receive a seat post 118 having an appropriately sized oblong oval cross-section. Other configurations are also possible. For example, the seat tube interface 208 may have a cross-section of any shape (e.g., square, rectangular, circular, oval, diamond, and other shapes and approximations of these shapes, such as rounded corners), and the seat post interface 206 may have a cross-section of any shape (such as the ones listed for the seat tube interface 208). The cross-sections of the seat tube interface 208 and the seat post interface 206 may be the same as each other or different than each other.

A variety of clamping mechanisms may be used to secure the insert 200 in seat tube 102 and to secure seat post 118 in insert 200. The mechanism for clamping the insert 200 to the seat tube 102 can be either integral to the seat post clamping mechanism or there can be two separate mechanisms (e.g., the insert 200 may be screwed in place to the seat tube 102, or clamped to the seat tube 102 with a separate clamp, and the seat post clamp can simply clamp the seat post 118 to the insert 102). These mechanisms can be either external or internal to the seat tube 102 of the bicycle frame 100. In addition, the mechanism can be partially internal to the seat tube 102 and partially external to the seat tube.

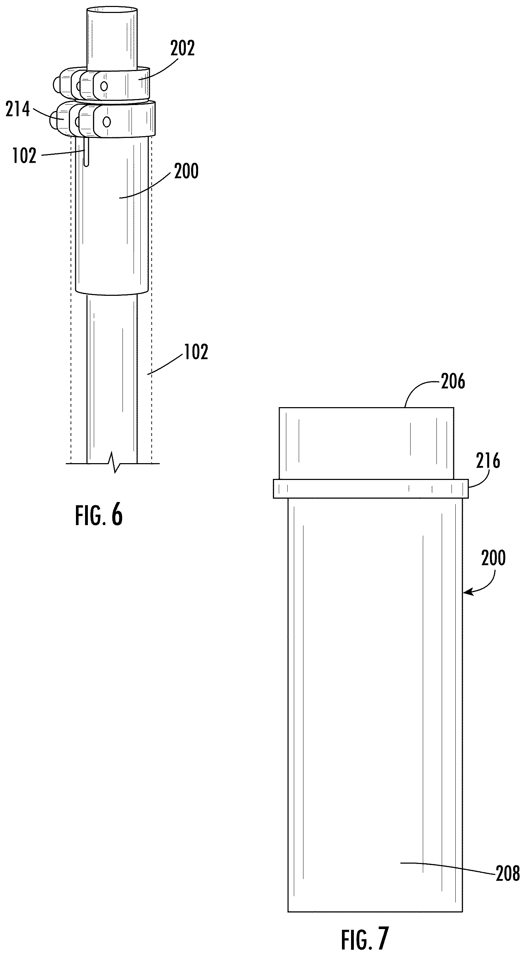

Fig. 6 shows insert 200 according to some embodiments. Insert 200 is located in seat tube 102. As shown in FIG. 6, two separate clamping mechanisms are used. Specifically, in this embodiment, insert 200 is coupled to seat tube 102 with seat tube clamp 214. Insert 200 receives seat post 118 and is secured to seat post 118 with seat post clamp 202. Both seat tube clamp 214 and seat post clamp 202 in this embodiment are external to seat tube 102. Fig. 7 shows a side view of insert 200 from Fig. 6. This shows seat tube interface 208 is offset from seat post interface 206. As shown in FIGS. 6 and 7, the seat post interface 206, in some embodiments, is disposed above retaining edge 216 (unlike the insert 200 shown in FIG. 3). Other embodiments of two separate clamping mechanisms are also possible. For example, a seat post clamp 202 may be disposed within seat tube 102 (e.g., within or as part of insert 200), and a seat tube clamp 214 may be disposed outside of seat tube 102. In some embodiments, the seat post clamp 202 and seat tube clamp 214 may be vertically aligned. This alignment allows for a single screw or similar fastening mechanism to tighten both clamps. The screw (e.g., screw 204) may also be used to interlock the insert 200 into the seat tube 102.

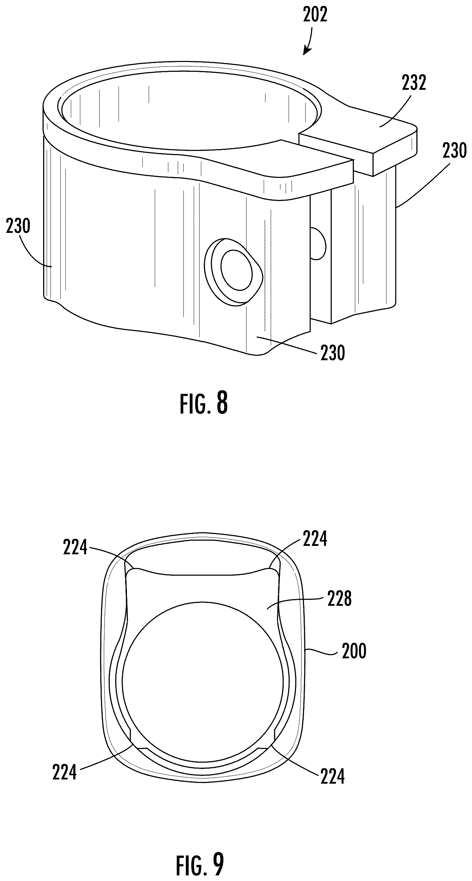

Fig. 8 shows seat post clamp 202 according to some embodiments, in which a single clamping mechanism may secure insert 200 within seat tube 102 and seat post 118 within insert 200 (see also FIG. 3). This single clamping mechanism (seat post clamp 202) may be entirely disposed within seat tube 102. In some embodiments, seat post clamp 202 includes clamp ledge 232. Clamp ledge 232 may be used by a user to hold and orient seat post clamp 202 in insert 200. In some embodiments, seat post clamp 202 also includes clamp extensions 230. Clamp extensions 230 are configured to extend into clamp extension receivers 224 formed in insert 200.

Fig. 9 shows a top view of insert 200 of Fig. 3. As shown, insert 200 includes clamp extension receivers 224. Clamp extension receivers 224 are configured to receive clamp extensions 230. Clamp extensions 230 are configured to improve the effect of seat post clamp 202. When seat post clamp 202 is tightened, clamp extensions 230 that extend into the upper two clamp extension receivers 224 will provide a force to push on clamp extension receivers 224. This increases the deformation of insert 200 in seat tube 102 and improves the strength of the friction fit between seat tube 102 and insert 200.

In some embodiments, the tightening of seat post clamp 202 around seat post 118 also secures insert 200 in seat tube 102. For example, as seat post clamp 202 is tightened, the upper portion of insert 200 deforms in seat tube 102. This acts to wedge insert 200 in seat tube 102. For example, seat post clamp 202 may include a seat post clamp void 210 (see FIG. 3). Seat post clamp void 210 divides seat post clamp 202. Screw 204 may extend through portions of seat post clamp 202 and extend across the void. As screw 204 is tightened, the portions of seat post clamp 202 will be brought closer together and seat post clamp void 210 will become smaller. This deformation of seat post clamp 202 will result in securing seat post 118 within insert 200, as well as causing portions of seat post clamp 202 to deflect. For example, seat post clamp 202 may be deformed such that seat post clamp 202 applies pressure to certain points of insert 200. Fig. 3 shows the deformation points 212 on insert 200. At these deformation points 212, the upper portion of insert 200 is pushed outward (i.e. against seat tube 102). This secures insert 200 to seat tube 102. The locations of deformation points 212 may be determined by adjusting the geometry of seat post clamp 202. The clamp extensions 230 pushing on clamp extension receivers 224 also helps secure insert 200 to seat tube 102. Thus, the single clamping mechanism secures both the seat post 118 within the insert 200 and the insert 200 within the seat tube 102.

The foregoing clamping mechanisms are provided only as examples. Other clamping mechanisms may also be used in some embodiments.

This disclosure, its aspects and embodiments, are not limited to the specific material types, components, methods, or other examples disclosed herein. Many additional material types, components, methods, and procedures known in the art are contemplated for use with particular implementations from this disclosure. Accordingly, for example, although particular implementations are disclosed, such implementations and implementing components may comprise any components, models, types, materials, versions, quantities, and/or the like as is known in the art for such systems and implementing components, consistent with the intended operation.

It will be understood that implementations of the system and device for angling a bicycle seat relative to the bicycle frame include but are not limited to the specific components disclosed herein, as virtually any components consistent with the intended operation of various systems and devices for angling a bicycle seat relative to the bicycle frame may be utilized. Accordingly, for example, it should be understood that, while the drawings and accompanying text show and describe particular system and device for angling a bicycle seat relative to the bicycle frame implementations, any such implementation may comprise any shape, size, style, type, model, version, class, grade, measurement, concentration, material, weight, quantity, and/or the like consistent with the intended operation of the system and device for angling a bicycle seat relative to the bicycle frame.

The concepts disclosed herein are not limited to the specific system and device for angling a bicycle seat relative to the bicycle frame shown herein. For example, it is specifically contemplated that the components included in particular system and device for angling a bicycle seat relative to the bicycle frame may be formed of any of many different types of materials or combinations that can readily be formed into shaped objects and that are consistent with the intended operation of the system and device for angling a bicycle seat relative to the bicycle frame. For example, the components may be formed of: rubbers (synthetic and/or natural) and/or other like materials; glasses (such as fiberglass), carbon-fiber, aramid-fiber, any combination therefore, and/or other like materials; elastomers and/or other like materials; polymers such as thermoplastics (such as ABS, fluoropolymers, polyacetal, polyamide, polycarbonate, polyethylene, polysulfone, and/or the like, thermosets (such as epoxy, phenolic resin, polyimide, polyurethane, and/or the like), and/or other like materials; plastics and/or other like materials; composites and/or other like materials; metals, such as zinc, magnesium, titanium, copper, iron, steel, carbon steel, alloy steel, tool steel, stainless steel, spring steel, aluminum, and/or other like materials; and/or any combination of the foregoing.

Furthermore, systems and device for angling a bicycle seat relative to the bicycle frame may be manufactured separately and then assembled together, or any or all of the components may be manufactured simultaneously and integrally joined with one another. Manufacture of these components separately or simultaneously, as understood by those of ordinary skill in the art, may involve 3-D printing, extrusion, pultrusion, vacuum forming, injection molding, blow molding, resin transfer molding, casting, forging, cold rolling, milling, drilling, reaming, turning, grinding, stamping, cutting, bending, welding, soldering, hardening, riveting, punching, plating, and/or the like. If any of the components are manufactured separately, they may then be coupled or removably coupled with one another in any manner, such as with adhesive, a weld, a fastener, any combination thereof, and/or the like for example, depending on, among other considerations, the particular material(s) forming the components.

In places where the description above refers to particular systems and devices for angling a bicycle seat relative to the bicycle frame implementations, it should be readily apparent that a number of modifications may be made without departing from the spirit thereof and that these implementations may be applied to other implementations disclosed or undisclosed. The presently disclosed system and device for angling a bicycle seat relative to the bicycle frame is, therefore, to be considered in all respects as illustrative and not restrictive.

## Claims

1. A system for changing the effective seat angle of a bicycle, the system comprising:
a bicycle having a seat tube;
a bicycle seat having a seat post; and
an insert, the insert comprising:
a seat tube interface configured to slide into the seat tube; and
a seat post interface configured to receive the seat post, the seat post interface formed interior of the seat tube interface,
wherein the seat tube interface and the seat post interface are offset.

2. The system of claim 1, wherein the offset is an angular offset, a lateral offset, or a combination of an angular offset and a lateral offset.

3. The system of claim 1, wherein the seat tube interface is configured to slide into the seat tube in both a forward seat position and a rearward seat position, wherein the offset when the seat tube interface is in the forward seat position is different than the offset when the seat tube interface is in the rearward seat position.

4. The system of claim 1, further comprising:
a clamp, the clamp configured to couple the insert to the seat post,
wherein the insert further comprises a clamp receiving portion configured to receive at least a portion of the clamp.

5. The system of claim 4, wherein the clamp comprises clamp extensions configured to fit into extension receivers formed in the clamp receiving portion, and
wherein the clamp is configured to be tightened around the seat post, and wherein when the clamp is tightened around the seat post, the clamp extensions are pushed into the extension receivers.

6. The system of claim 4, wherein a top edge of the clamp and a top edge of the insert are flush.

7. The system of claim 4, further comprising a second clamp, the second clamp configured to couple the insert to the seat tube.

8. The system of claim 1, further comprising reinforcing members disposed on the seat tube interface.

9. A bicycle seat tube insert comprising:
a seat tube interface configured to slide into a seat tube of a bicycle; and
a seat post interface configured to receive a seat post of a bicycle seat, the seat post interface formed interior of the seat tube interface,
wherein the seat tube interface and the seat post interface are offset.

10. The insert of claim 9, wherein the offset is adjustable by a user.

11. The insert of claim 9, wherein the seat tube interface has a first cross-sectional shape and the seat post interface has a second cross-sectional shape, and wherein the first cross-sectional shape and the second cross-sectional shape are different.

12. A bicycle seat tube insert comprising:
a seat tube interface configured to slide into a seat tube of a bicycle;
a seat post interface configured to receive a seat post of a bicycle seat, the seat post interface formed interior of the seat tube interface; and
a clamp, the clamp at least partially disposed in a clamp receiving portion formed in the insert,
wherein the seat tube interface and the seat post interface are offset.

13. The insert of claim 12, wherein the clamp is shaped to plastically deform an upper portion of the insert when the clamp is tightened, and
wherein the plastic deformation of the upper portion secures the insert in the seat tube.

14. The insert of claim 12, wherein the insert further comprises a retaining portion.

15. The insert of claim 12, wherein the clamp receiving portion has extension receivers formed therein.
